Europäisches Patentamt

European Patent Office

Office européen des brevets

(19)

(11) Veröffentlichungsnummer: **0 075 748**
**B1**

(12) **EUROPÄISCHE PATENTSCHRIFT**

(45) Veröffentlichungstag der Patentschrift:
**12.03.86**

(51) Int. Cl.⁴: **B 23 K 9/16**

(21) Anmeldenummer: **82108143.7**

(22) Anmeldetag: **03.09.82**

(54) Schweissbrenner zum Schutzgasschweissen mit abschmelzender Drahtelektrode.

(30) Priorität: **28.09.81 DE 3138539**

(43) Veröffentlichungstag der Anmeldung:
**06.04.83 Patentblatt 83/14**

(45) Bekanntmachung des Hinweises auf die Patenterteilung:
**12.03.86 Patentblatt 86/11**

(84) Benannte Vertragsstaaten:
**AT CH FR IT LI NL SE**

(56) Entgegenhaltungen:
**AT - B - 345 067**
**DE - B - 2 416 545**
**US - A - 3 690 567**

(73) Patentinhaber: **MESSER GRIESHEIM GMBH, Hanauer Landstrasse 330, D-6000 Frankfurt/Main 1 (DE)**

(72) Erfinder: **Auer, Rupert, Kleiststrasse 10, D-8057 Eching (DE)**
Erfinder: **Buchbauer, Christian, Scheidegger Ring 4, D-8059 Langenpreising (DE)**
Erfinder: **Reichelt, Harald, Theodor-Heuss-Strasse 7, D-8042 Oberschleissheim (DE)**

## Beschreibung

Die vorliegende Erfindung bezieht sich auf einen Schweissbrenner zum Schutzgasschweissen mit abschmelzender Drahtelektrode bei dem an dem einen Ende des Brennerrohres ein Düsenstock vorzugsweise über eine Gewindeverbindung im Brennrohr befestigt ist, wobei Brennerrohr und Düsenstock von einer Isolierung umgeben sind und ferner eine Schutzgasdüse auf der Isolierung befestigbar ist.

In der bekannt gewordenen DD-PS-32 020, ist der Düsenstock als fester Bestandteil des Brennerrohres in das Brennerrohr integriert. Durch die über das gesamte Brennerrohr bis zum Ende des Brennerrohres reichende Isolierung wird gleichzeitig der Düsenstock isoliert. Bei einem derartig isolierten Düsenstock erfordert eine Beschädigung der Isolation, wie sie z.B. durch Hitze oder durch Schweissspritzer erfolgen kann, immer einen Austausch des Brennerrohres, um eine Gefährdung des Schweissers durch nicht isolierte elektrisch leitende Teile zu vermeiden. Ebenso muss bei einer Beschädigung des fest in dem Brennerrohr integrierten Düsenstockes, das gesamte Brennerrohr ausgetauscht werden, was unwirtschaftlich ist.

Durch den isolierten Düsenstock wird der Vorteil einer kostengünstigen Ausgestaltung der Gasdüse erreicht, da diese z.B. als einfache, nicht zusätzlich isolierte Metalldüse ausgebildet werden kann. Hierzu ist aus der DE-A-1 219 144 ein Gasdüsensitz bekannt, bei dem die metallische Gasdüse direkt auf den teilweise mit einem Schutzschlauch isolierten konischen Düsenstock fest aufgeschoben und durch Reibschlussverbindung gehalten wird. Die Praxis hat gezeigt, dass durch die verschiedenen Werkstoffe von Brennerrohr und Gasdüse und den daraus resultierenden unterschiedlichen Ausdehnungskoeffizienten bei Erwärmung des Brennerrohres und der Gasdüse eine ausreichende Reibschlussverbindung nicht immer gewährleistet ist. Aufgrund des nicht bis zum Ende des Düsenstockes reichenden isolierenden Schutzschlauches, können durch beim Schweissen entstehende Spritzer Kontaktbildungen zwischen Düsenstock und Gasdüse auftreten, was eine Zerstörung des Gasdüse zur Folge haben kann.

Aus der US-A-3 690 567 ist bekannt, dass der Düsenstock über eine Gewindeverbindung am Brennrohr befestigt ist. Aufgabe der Erfindung ist es unter Beibehaltung der Vorteile einer einfachen Gasdüsenkonstruktion die Nachteile der bekannten Vorrichtungen zu vermeiden und dabei insbesondere einen Schweissbrenner zu schaffen, dessen Düsenstock isoliert und einfach auswechselbar sowie herstellbar ist.

Die Erfindung löst die Aufgabe dadurch, dass der Düsenstock von einer Isolierung vollständig mit einer einstückigen Isolierung umpresst ist.

In vorteilhafter Weiterbildung wird die Isolierung zur Halterung der Gasdüse ausgebildet.

Die durch die Erfindung erreichten Vorteile sind im wesentlichen darin zu sehen, dass ein einfaches Auswechseln des Düsenstockes gemeinsam mit der Isolation unter kostengünstiger Ausgestaltung desselben erreicht wird. Auch dient die den Düsenstock vollständig umgebende elektrische Isolation als Gasdüsensitz, der eine einfache Ausbildung der Gasdüse ermöglicht.

Der metallische Teil des Düsenstocks wird bevorzugt spanabhebend hergestellt, und anschliessend mit einer aushärtbaren Formmasse, vorzugsweise Polyesterpressmasse, umpresst.

Hierbei ist es in vorteilhafter Ausgestaltung möglich, vor dem Umpressen des Düsenstockes in die Pressform eine Metallbüchse, die den Gasdüsensitz bildet, so einzulegen, damit diese nach dem Umpressen formschlüssig in der Isolierung befestigt ist. In gleicher Weise kann vorteilhaft vorzugsweise eine längsgeschlitzte Spannhülse zum Halten der Gasdüse mit der Isolierung verbunden werden.

Durch das Umpressen wird ferner in einfacher Weise eine fest auf dem Düsenstock haftende Isolierung erreicht, die auch durch mehrfaches Lösen des Düsenstockes bzw. durch Auswechseln der Gasdüse nicht gegenüber dem Düsenstock gelockert wird. Dabei wird in einem Arbeitsgang – Umpressen – sowohl der Düsenstock isoliert und gleichzeitig ein metallischer Gasdüsensitz sowie eine Gasdüsenhalterung mit der Isolierung und dem Düsenstock fest verbunden. Die so gebildete Baueinheit ist besonders kostengünstig herstellbar.

Der Düsenstock weist vorzugsweise an seinem Aussenmantel radiale Rillen, Erhebung oder dergleichen auf, wodurch die axiale Befestigung zwischen Isolierung und Düsenstock verbessert wird. Drüberhinaus können am Aussenmantel axiale Erhebungen bzw. Rillen vorgesehen werden, wodurch die radiale Befestigung zwischen Isolierung und Düsenstock verbessert wir.

Durch die vorgeschlagene Verbindung zwischen Düsenstock und Brennerrohr ist es ferner möglich unterschiedliche Isolationsmaterialien zur Düsenstock bzw. Brennerisolation zu verwenden.

In den Zeichnungen veranschaulicht:

Fig. 1 einen Schutzgasschweissbrenner in schematischer Darstellung

Fig. 2 die Einzelheit A in Fig. 1 in vergrösserter Halbschnitt-Darstellung

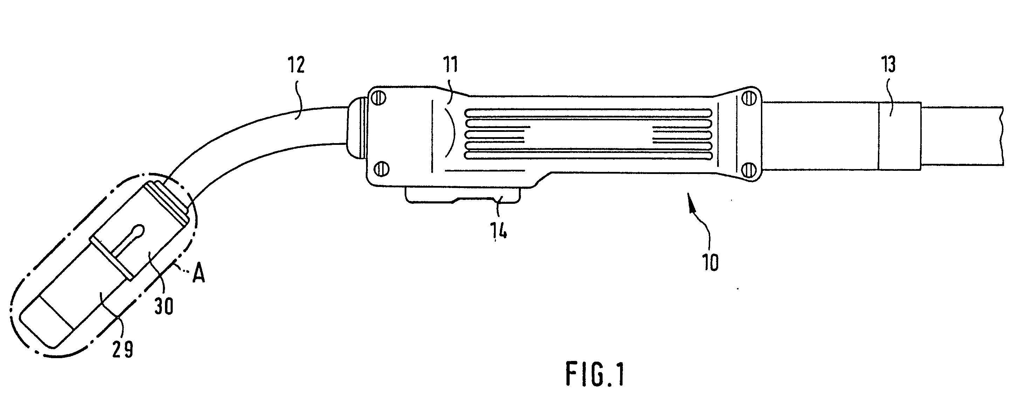

In Fig. 1 ist der Schutzgasschweissbrenner mit abschmelzender Elektrode in seiner Gesamtheit mit 10 bezeichnet. Der Schweissbrenner 10 weist einen aus zwei Halbschalen gebildeten Griff 11 auf, an dessen einen Ende ein Brennerrohr 12 und an dessen anderem Ende ein Schlauchpaket 13 befestigt ist. Ferner ist im Griff 11 ein Bedienungsschalter 14 eingesetzt.

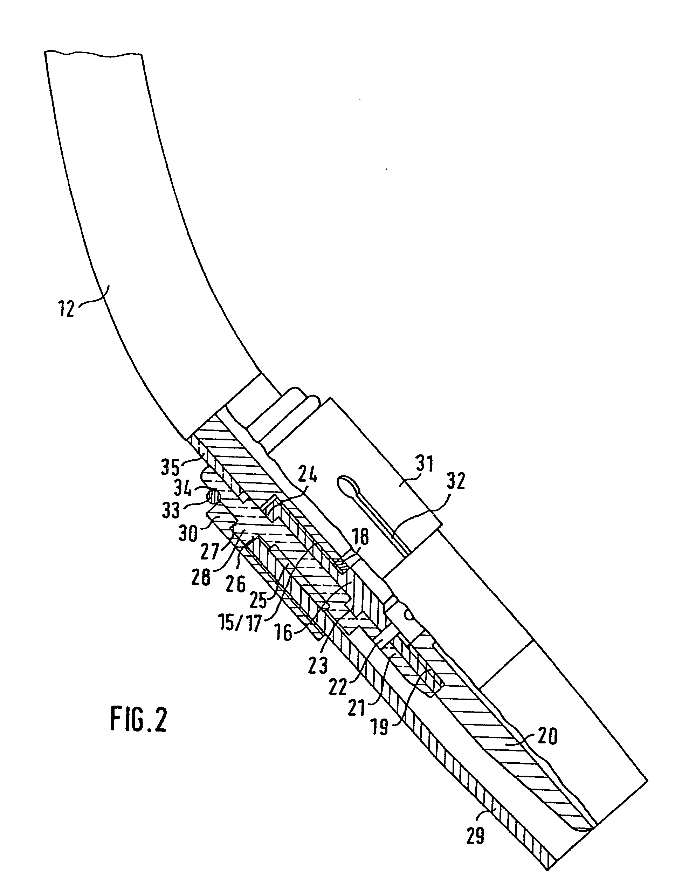

Das Brennerrohr 12 weist, wie Fig. 2 zeigt, ein Aussengewinde 15 zum Befestigen des Düsenstockes 16 auf, der hierzu mit einem Innengewinde 17 versehen ist. Zur Sicherung der Gewindeverbindung ist ein Federring 18 vorgesehen. In der dem Brenner 12 gegenüberliegenden Seite des Düsenstockes 16 ist ebenfalls ein Innengewinde 19 vorgesehen in das eine Stromkontaktdüse 20 eingeschraubt ist. An dieser Seite weisen der Düsenstock 16 und eine kraftschlüssig umpresste Isolation 21 mehrere Gasaustrittsöffnungen 22 auf. Die Mantelfläche des Düsenstockes 16 weist Erhebungen 23 und 24 auf, deren Querschnittsfläche nicht kreisförmig ist, sondern Unstetigkeiten aufweist, z.B. als Vieleck ausgebildet ist. Diese Mantelfläche des Düsenstockes 16 ist von der, vorzugsweise aus Polyesterpressmasse umpressten elektrischen Isolierung 21, in der als Gasdüsensitz eine Metallhülse 25 angeordnet ist, umgeben. Durch die über die Brennerrohrisolation 35 reichende Isolation 21 des Düsenstockes 16 wird eine kriechstreckenfreie Isolation zwischen Brennerrohr 12 und Düsenstock 16 erreicht.

An dem dem Brennerrohr 12 zugeordneten Ende der Isolierschicht 21 dient die eine Stirnseite 26 des ringförmigen Bundes 28 der Isolierschicht 21 als Anschlagfläche für eine Gasdüse 29 und die andere Stirnseite 27 als Anschlagfläche für eine Spannhülse 30. Die Spannhülse 30 weist im Haltebereich 31 für die Gasdüse 29 vorzugsweise Längsschlitze 32 auf. Sie wird durch einen Sprengring 33, dessen Sitz 34 in die Isolierung 21 rillenförmig eingepresst ist, gegen axiale Verschiebung gehalten.

Die Spannhülse 30 klemmt die Gasdüse 29 auf die in der Isolierschicht 21 miteingepresste Metallhülse 25, so dass eine kraftschlüssige Verbindung erreicht wird.

Bei der in Fig. 2 im Halbschnitt dargestellten Einzelheit A der Fig. 1 wurde aus Gründen der Übersichtlichkeit auf eine Darstellung der Drahtelektrode und der Drahtspirale verzichtet.

## Patentansprüche

1. Schweissbrenner (10) zum Schutzgasschweissen mit abschmelzender Drahtelektrode, bei dem an dem einen Ende des Brennerrohres (12) ein Düsenstock (16), vorzugsweise über eine Gewindeverbindung (15, 17) am Brennrohr (12) befestigt ist, wobei Brennerrohr (12) und Düsenstock (16) von einer Isolierung (21) umgeben sind und ferner eine Schutzgasdüse (29) auf der Isolierung (21) befestigbar ist, dadurch gekennzeichnet, dass der Düsenstock (16) vollständig mit einer einstückigen Isolierung (21) umpresst ist.

2. Schweissbrenner nach Anspruch 1, dadurch gekennzeichnet, dass die Isolierung (21) zur Halterung der Gasdüse (29) ausgebildet ist.

3. Schweissbrenner nach Anspruch 2, dadurch gekennzeichnet, dass in der Isolierung (21) eine Metallbuchse (25)als Gasdüsensitz befestigt ist.

4. Schweissbrenner nach Anspruch 2 oder 3, dadurch gekennzeichnet, dass auf der Isolierung (21) eine vorzugsweise längsgeschlitzte Spannhülse (31) zur Gasdüsenhalterung vorgesehen ist.

5. Schweissbrenner nach Anspruch 1, dadurch gekennzeichnet, dass auf das Brennerrohr (12) bei aufgeschreubtem Düsenstock (16) die Isolierung (21) des Düsenstockes (16) die Isolierung (21) des Brennerrohres (12) teilweise umgibt.

## Revendications

1. Pistolet de soudage (10) pour le soudage sous gaz protecteur comportant une électrode en fil, consommable, un corps de buse (16) étant fixé à une extrémité du tube de chalumeau (12), en étant de préférence fixé par une liaison vissée (15, 17) sur le tube de chalumeau (12), le tube de chalumeau (12) et le corps de buse (16) étant entourés par une isolation (21) et en outre une buse de gaz protecteur (29) peut être fixée sur l'isolation (21), caractérisé en ce que le corps de buse (16) est muni de façon complète d'une isolation (21) en une seule pièce, qui l'entoure de force.

2. Pistolet de soudage selon la revendication 1, caractérisé en ce que l'isolation (21) est réalisée de façon à maintenir la buse de gaz (29).

3. Pistolet de soudage selon la revendication 1, caractérisé en ce qu'une douille métallique (25) est fixée dans l'isolation (21) pour constituer un siège de buse de gaz.

4. Pistolet de soudage selon la revendication 2 ou 3, caractérisé en ce qu'une douille de serrage (31), de préférence fondue longitudinale, est prévue sur l'isolation (21) pour retenir la buse de gaz.

5. Pistolet de soudage selon la revendication 1, caractérisé en ce que lorsque le corps de buse (16) est vissé sur le tube de chalumeau (12), l'isolation (21) du corps de buse (16) entoure partiellement l'isolation (21) du tube de chalumeau (12).

## Claims

1. Welding torch (10) for shielded arc welding with consumable welding wire, to which at one end of the torch pipe (12) preferably through a screw-coupling (15, 17) a burner nozzle assembly is mounted, case in which torch pipe (12) and burner nozzle assembly (16) are coated by an insulation (21) and also an inert-gas nozzle (29) to which an insulation (21) may be attached, characterized by the fact that the burner nozzle assembly (16) is entirely covered by an insulation (21) in one piece which is pressed around.

2. Welding torch according to claim 1, characterized by the fact that the insulation (21) is developed for supporting the gas nozzle (29).

3. Welding torch according to claim 2, characterized by the fact that a metallic sleeve (25) is attached to the inner side of the insulation (21) as gaz nozzle seat.

4. Welding torch according to claim 2 or 3, characterized by the fact that on the insulation (21) preferably an adapter sleeve (31) with elongated slots is provided for the support of the gas nozzle.

5. Welding torch according to claim 1, characterized by the fact that on the torch pipe (12) in case of screwed on burner nozzle assembly (16) the insulation (21) of the burner nozzle assembly (12) covers partly the insulation (21) of the torch pipe (12).

FIG.1

FIG.2